# EUROPEAN PATENT SPECIFICATION

(11) **EP 0 483 716 B1**
(45) Date of publication and mention of the grant of the patent: **24.07.1996**
(21) Application number: 91118333.3
(22) Date of filing: 28.10.1991
(51) Int. Cl.: B29C 70/08, D21H 13/40

(54) **Method of producing fiber-reinforced thermoplastic resin molding material**
Verfahren zur Herstellung einer Formmasse aus faserverstärktem thermoplastischem Harz
Méthode de production d'une masse déformable en résine thermoplastique renforcée de fibres

(30) Priority: 29.10.1990 JP 288512/90
(43) Date of publication of application: 06.05.1992
(73) Proprietor: Mitsubishi Chemical Corporation, Chiyoda-ku Tokyo (JP)
(72) Inventor: Nozawa, Tadamichi, c/o Sentan Gijutsu Kenkyusho, Kawasaki-shi, Kanagawa-ken, 211 (JP); Uchino, Hiroyuki, c/o Sentan Gijutsu Kenkyusho, Kawasaki-shi, Kanagawa-ken, 211 (JP); Matoba, Tetsu, c/o Nagoya Seitetsusho, Tokai-shi, Aichi-ken, 476 (JP); Ohno, Kenyu, c/o Yokkaichi Sogo Kenkyusho, Yokkaichi-shi, Mie-ken 510 (JP); Kimura, Takao, c/o Yokkaichi Sogo Kenkyusho, Yokkaichi-shi, Mie-ken 510 (JP)
(74) Representative: VOSSIUS & PARTNER

(56) References cited:
- EP-A- 0 341 977
- US-A- 2 811 769
- CAOUTCHOUCS ET PLASTIQUES. vol. 64, no. 669, May 1987, PARIS FR pages 97 - 101; 'General Electric et les T. R. E.'
- PATENT ABSTRACTS OF JAPAN vol. 6, no. 142 (M-146)(1020) July 1982 & JP-57 063 227 (KOUBUNSHI GIKEN K.K.)

## Description

The present invention relates to a fiber-reinforced thermoplastic resin molding material which is used for a hot press molding. Molded products obtained from the fiber-reinforced thermoplastic resin molding material of the present invention are widely used for industrial parts such as automobile parts.

Recently, press molded products of fiber-reinforced thermoplastic resins tend to be substituted for press molded products of metals as parts such as front end retainers, seat shells, lamp housings, battery trays and bumper beams of automobiles. Features of fiber-reinforced thermoplastic resins are that complicated molded products partly changed in wall thickness or provided with boss or rib can be produced by inserting a heated sheet-like molding material in a pair of molds heated or not heated and compression molding it in a short time, and that the molded products obtained have high mechanical strength and are light in weight.

Methods of producing the fiber-reinforced thermoplastic resin sheet-like molding material can be classified into the following two methods.
(1) Laminating method: This laminating method comprises laminating a thermoplastic resin and a mat-like strand reinforcing fiber subjected to needling (a step thrusting needles into a plurality of strand-like reinforcing fibers and entangling them with each other), continuously feeding the laminate between steel belts of a double belt conveyor type continuous press to carry out heating and pressing and then, cooling the laminate to make a sheet-like molding material. (Japanese Patent Kokai (Laid-open) Nos. 48-80172, 52-40558, and 55-77525).
(2) Paper-making method: This paper making method comprises making a nonwoven material comprising uniformly dispersed reinforcing fibers cut to about 3-50 mm in length and powdered resin by a paper making technique, heating and pressing this nonwoven material and then cooling the material to make a sheet-like molding material (Japanese Patent Kokai (Laid-open) Nos. 49-13403 and 49-14704).

It is necessary in a hot press molding of such a sheet-like molding material that the reinforcing fiber and the thermoplastic resin flow without causing separation of the fiber from the resin when the molding material is to be molded into a complicated shape and that a deterioration of appearance of the molded products due to a rising of the reinforcing fibers onto the surface of the molded products is inhibited.

The problem with sheet-like molding materials produced by the laminating method is that since the strand reinforcing fibers in the mat are restrained by the needling, the reinforcing fibers and the thermoplastic resin are readily separated from each other when they flow in the mold.

On the other hand, the above-mentioned problem does not occur and homogeneous molded products can be obtained in the case of sheet-like molding materials produced by the paper making method, since the uniformly dispersed discontinuous reinforcing fibers are present in a less restrained state from each other in the thermoplastic resin. However, the nonwoven materials produced by the paper making method have a defect in that they are so bulky because the reinforcing fibers are randomly orientated. Thickness of the nonwoven materials varies depending on the shape of reinforcing fibers and the paper making conditions, but their thickness is about ten times the thickness of generally used sheets which are obtained by the press molding of fiber-reinforced thermoplastic resin and from which voids are removed.

Before molding, sheet-like molding materials are heated to a temperature of higher than the softening point or melting point of the thermoplastic resin which constitutes a matrix. During this heating, the binding power of the thermoplastic resin to the reinforcing fibers is weakened and hence, an expansion of the sheet occurs due to a "spring back" of the reinforcing fibers returning to the original state. This expansion begins from the surface of the sheet and progresses through the sheet with heat gradually closing to the center in the direction of thickness of the sheet (i.e. at the 1/2 depth) and simultaneously therewith a heat insulating air layer is formed in the sheet, resulting in a reduction of thermal conductivity. As the result, there occur problems of reduction in flowability during the molding caused by an insufficient rising of temperature of the thermoplastic resin of the center in the direction of thickness of the sheet, deterioration of the thermoplastic resin due to a thermal degradation caused by a localized heating of surface of the sheet, thereby leading to a rising of the reinforcing fibers, to a deterioration of the appearance and to a reduction in strength.

For carrying out the heating so as not to increase the difference in temperature between the surface of the sheet-like molding material and the center in the direction of the sheet-like molding material, there may be employed a method according to which atmospheric temperature in a heating oven is adjusted at a low level and heating is carried out for a long time. However, such a method cannot be said to be industrially practical since a longer cycle time is required for molding and in some case, a thermal degradation of thermoplastic resin of the surface portion of sheet occurs.

EP-A-341 977 discloses a method for producing a fiber-reinforced thermoplastic resin molding material by heating and pressing a nonwoven material made by a paper making method and mainly composed of reinforcing fibers and a thermoplastic resin, and then cooling the nonwoven material wherein the reinforcing fibers are mixed with a thermoplastic resin in the form of fiber bundles. The sizing agent used to form the fiber bundles introduced into the slurry is water-soluble, so that the fibers separate from each other during the step of dispersing the fiber bundles with the thermoplastic matrix resin in an aqueous slurry.

The objective of the present invention is to provide a method of producing a sheet-like molding material of a fiber-reinforced thermoplastic resin which is free from the above mentioned defects and which exhibits a high heating efficiency.

The present invention is a method of producing a fiber-reinforced thermoplastic resin molding material (12) by mixing a thermoplastic resin (2) and reinforcing fibers according to a paper making method to form a non-woven material (8), and heating, pressing and then cooling the resulting non-woven material (8), characterized in that the reinforcing fibers are mixed with the thermoplastic resin in the form of single reinforcing fibers (1) and in the form of fiber bundles(13) each of which comprises 10 to 1000 single reinforcing fibers bundled with a water-insoluble binder.

Fig. 1 is a schematic drawing which shows one example of the steps of production of a sheet-like molding material of fiber-reinforced thermoplastic resin by the paper making method.

Fig. 2 is a schematic view of a nonwoven material used for the production of convential sheet-like molding material of a fiber-reinforced thermoplastic resin.

Fig. 3 is a schematic view of a nonwoven material used for a production of the sheet-like molding material of a fiber-reinforced thermoplastic resin according to the present invention.

Figs. 4 and 5 are graphs which show the expansion of the sheet and the difference in temperature between the surface of the sheet and the center in the direction of thickness of the sheet when the fiber-reinforced thermoplastic resin sheet is heated.

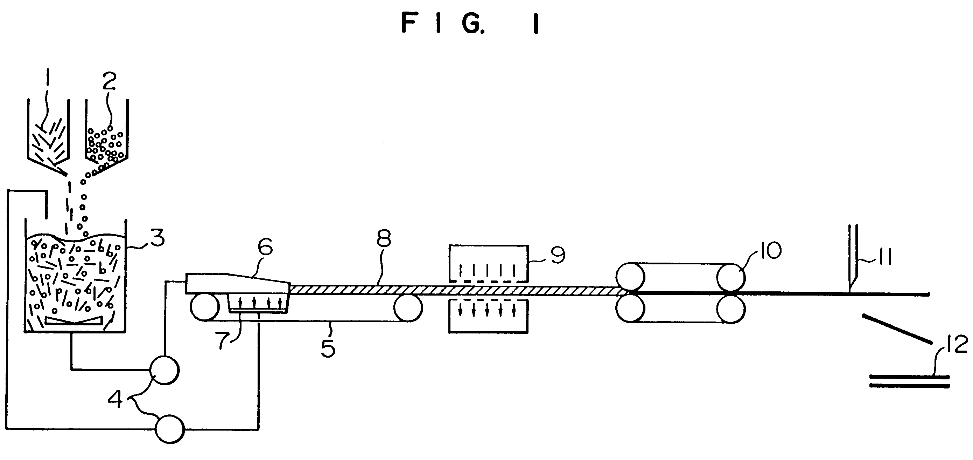

Fig. 1 shows an example of steps for a production of a sheet-like molding material of a fiber-reinforced thermoplastic resin by the paper making method. Reinforcing fibers 1 which have a diameter of 3-30 µm and a length of about 3-50 mm and the powdered thermoplastic resin 2 are continuously introduced into water into the dispersing tank 3. In the dispersing tank, stirring is carried out to uniformly disperse the reinforcing fibers and the thermoplastic resin and the resulting dispersion is fed to head box 6 provided above mesh-like belt conveyor 5 by pump 4. Inside of the wet box 7 located under the head box pressure is kept at negative values so that suction and dehydration of the dispersion in the head box is carried out and thus, the non-woven material 8 which is a composite of reinforcing fibers and the thermoplastic resin is continuously produced. This nonwoven material is dried by a ventilating type hot-air drier 9, then it is heated and pressed by a double-belt conveyor type continuous press 10. Thereafter it is consolidated into a sheet-shape by cooling, and finally it is cut into a shape depending on the size necessary for a hot press molding by a cutter 11 to obtain a sheet-like molding material 12 of a fiber-reinforced thermoplastic resin.

The method of the invention provides as the sheet-like molding material of a fiber-reinforced thermoplastic resin, material which contains voids in addition to material from which voids have been completely removed. Furthermore, it is also possible to provide sheet-like molding materials in which voids are present by heating a part or the whole thermoplastic resin to a temperature which is not lower than its softening point or melting point while melting the thermoplastic resin and simultaneously drying the nonwoven material with a hot-air dryer without using the double-belt conveyor type continuous press, and then cooling the material to bind the reinforcing fibers with the thermoplastic resin. The sheet-like molding materials in which voids are present can be made easily to be bent by selecting suitable blending ratios of the starting materials and by employing suitable heating and pressing conditions. Then thus obtained products can be made in the form of coils by reeling them up.

Such sheet-like molding materials in which voids are present, as one embodiment of the present invention, lead to a reduction of costs due to the omission of steps and furthermore, since gas permeability can be imparted to the material in the direction of thickness, heating can be performed with a high efficiency in a short time by employing ventilation type heating apparatuses in addition to a far infrared heating which has been often used for a hot press molding.

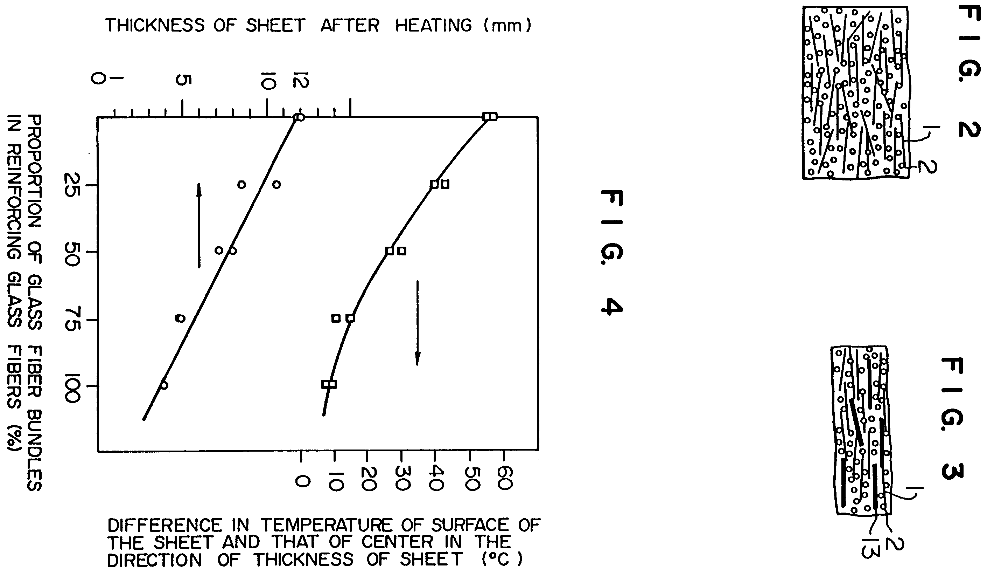

Reinforcing fibers which have been used for the conventional paper making method are surface treated with water-soluble polymers or lubricants in order to improve the dispersibility in water and/or are surface treated with silane coupling agents in order to improve the adhesion to a thermoplastic resin which constitutes a matrix. Therefore, as shown in Fig. 2, reinforcing fibers 1 and the powdered thermoplastic resin 2 as the starting materials for sheet-like molding materials of fiber-reinforced thermoplastic resin are uniformly dispersed and thus, nonwoven materials having very high bulkiness can be obtained.

In the present invention, in order to increase the bulk density of nonwoven materials produced by the paper making method, reinforcing fiber bundles made by bundling a plurality of single fibers or by mixing said reinforcing fiber bundles with single fibers are used in place of the conventionally used reinforcing fibers. The fibers in the reinforcing fiber bundle are firmly bundled by binders, which are water-insoluble and have film-forming characteristic under the condition of heating, such as polyurethane type binders and poly(vinyl acetate) type binders so as not to be dispersed in water in addition to silane coupling agents. When a mixture of reinforcing fibers and reinforcing fiber bundles are used, nonwoven materials in which reinforcing fibers 1, reinforcing fiber bundles 13 and powdered thermoplastic resin 2 are uniformly dispersed as shown in Fig. 3 are obtained.

In the sheet-like molding materials of a fiber-reinforced thermoplastic resin, produced by using as a starting material the nonwoven materials increased in bulk density according to the present invention, a spring back of the reinforcing fibers at heating is prevented. As a result, the expansion in the thickness of the sheet on heating decreases, the heating efficiency is improved, an excellent flowability during the molding step can be attained, and the appearance of the molded products can be improved by uniform heating.

The effect of inhibiting from expansion the sheet obtained by using reinforcing fiber bundles changes, depending on the proportion of the whole reinforcing fibers which constitute the nonwoven materials, and can be improved by increasing the number of the reinforcing fiber bundles of single fibers and the mixing ratio thereof. However, with an increase in the number of the reinforcing fiber bundles and of the mixing ratio thereof, there occurs a deterioration of appearance of the molded products due to the exposure of the reinforcing fiber bundles at the surface of the products. Therefore, it is desirable to produce nonwoven materials using reinforcing fiber bundles prepared by bundling 10-1000 single reinforcing fibers having a diameter of 3-30 µm and a length of about 3-50 mm and at a mixing ratio suitable for the envisaged use of the molded products.

The thermoplastic resins used as a starting material in the present invention include, for example, polyethylene, polypropylene, polystyrene, styrene-butadiene-acrylonitrile copolymer, styrene-acrylonitrile copolymer, polyvinyl chloride, polyvinylidene chloride, polyamide, polycarbonate, polyacetal, polyethylene terephthalate, polybutylene terephthalate, polyphenylene oxide, polysulfone, and polyphenylene sulfide, and mixtures of two or more of them. The thermoplastic resins may contain plasticizers, heat stabilizers, light stabilizers, fillers, dyes and pigments, impact resisting agents, bulking agents, nucleating agents, processing aids, glass short fibers, and the like.

In the present invention, glass fibers, carbon fibers, and metallic fibers and besides, inorganic and organic fibers are used as the reinforcing fibers and these fibers preferably have a diameter of 3-30 µm and are cut to a length of about 3-50 mm. The sheet-like molding material of fiber-reinforced thermoplastic resin obtained from the present invention exhibits not only superior properties as an ordinal heat-press molding material, but also exhibits good results under a pressure forming because of the improved heating characteristics.

Heating charactristics of the sheet-like molding materials of fiber-reinforced thermoplastic resin made from the nonwoven material which is a composite of the reinforcing fibers and the thermoplastic resin and which is prepared by the paper making method are improved according to the present invention. The sheet-like molding materials of fiber-reinforced thermoplastic resin which are obtained by the present invention are prevented from expansion caused by a spring back of the reinforcing fibers on heating in molding and as a result, heating efficiency is improved. Furthermore, good flowability can be attained by the uniform heating,and the appearance of the resulting molded products can be improved.

The present invention will be explained in more detail by the following examples. It should be understood that we intend to cover by the appended claims all modifications falling the true spirit and scope of our invention.

### Example 1

Glass fibers A of 10 µm in diameter and 25mm in length which were treated with a water-soluble polymer, a lubricant and a silane coupling agent and glass fiber bundles B each of which comprises 67 glass fibers of 10 µm in diameter and 13 mm in length which were bundled by urethane binder were used as reinforcing fibers. A nonwoven material comprising 40 wt% of the whole reinforcing fibers and 60 wt% of polypropylene resin and having a grammage of 4500 g/m² was produced by a paper making method.

The polypropylene resin used was in the form of powders prepared by grinding pellets of 3 mm in diameter and classifying the ground product into from 70 meshes (opening diameter 0.212 mm) to 10 meshes (opening diameter 1.7 mm) by screening. Mixing ratios of glass fibers A and glass fiber bundles B which constitutes the nonwoven materials are shown in Table 1. Fiber-reinforced thermoplastic resin sheets of 3.7 mm thickness from which voids were removed were obtained by a hot press consolidation of the above nonwoven materials.

The hot press consolidation was carried out by preheating the nonwoven material at 210°C for 10 minutes under unloading, then pressing the nonwoven material under a pressure of 20 kgf/cm² for 2 minutes and consolidating the nonwoven material by cooling for 3 minutes at the same pressure into a sheet. For measuring the temperature difference between the surface of the sheet and the center(in the direction of thickness of the sheet) on heating, thermocouples were previously inserted in the surface portion and the center of the nonwoven material. The resulting sheets were heated until the surface temperature reached 220°C in an infrared heating oven, and the thickness of the sheet after heating and the difference in temperature between the surface and the center of the sheet were measured.

**Table 1**

| Mixing ratio of reinforcing fibers (wt%) | | | | | |
|---|---|---|---|---|---|
| Content of glass fibers A | 40 | 30 | 20 | 10 | 0 |
| Content of glass fiber bundles B | 0 | 10 | 20 | 30 | 40 |
| Content of polypropylene resin | 60 | 60 | 60 | 60 | 60 |
| Proportion of glass fiber bundles B in reinforcing fibers | 0 | 25 | 50 | 75 | 100 |

The nonwoven materials produced by mixing glass fibers A and glass fiber bundles B were materials in which glass fibers A were dispersed in the state of single fibers and glass fiber bundles B were uniformly dispersed in the bundled state together with polypropylene resin powders as shown in Fig. 3. Bulk density of the materials increased with the increase in mixing ratio of the glass fiber bundles B (i.e. increase of the wt% content of glass fiber bundles B).

Results of experiments conducted by heating the sheets obtained in Example 1 are shown in Fig. 4. The arrows indicate the relevant abscissa of the corresponding graph. The sheet obtained by consolidating the nonwoven material comprising 40 wt% of glass fibers A and 60 wt% of polypropylene resin powders (i.e. 0 wt% of glass fiber bundles B) had a large spring back value affected by the rising of glass fibers A and therefore the thickness of the sheets after heating was about 12 mm, which means that the sheet expanded about 3.2 times the initial thickness 3.7 mm. As a result, thermal conductivity of the sheet considerably decreased and the difference in temperature between the surface of the sheet and that of the center in the direction of thickness of the sheet was 55°C ,and the temperature of the center was 165°C ,which was close to the melting point of the polypropylene resin. Furthermore, a phenomenon was observed in that a thermal degradation of the polypropylene resin in the surface portion of the heated sheet occurred, which caused a rising of the glass fibers. Such a sheet cannot provide a superior flowability and a good appearance of molded products required for molding of a fiber-reinforced thermoplastic resin.

It was confirmed that the heating characteristics of the fiber-reinforced thermoplastic resin sheet was improved by mixing glass fiber bundles B. The effect to inhibit expansion of the sheet was enhanced with the increase in mixing ratio of the glass fiber bundles B. Owing to the decrease in expansion of the sheet, the difference in temperature of the surface and that of the center in the direction of thickness of the sheet decreased and heat degradation of the polypropylene resin in the surface portion of the heated sheet was also inhibited. However, when the mixing ratio of the glass fiber bundles B was further increased,an exposure of the glass fiber bundles B at the surface of molded products became evident. When a fiber-reinforced thermoplastic resin sheet containing 40 wt% of reinforcing fibers was used as a molding material, both a superior flowability even during hot press molding of products with a complicated shape and good appearance of the molded products could be obtained by blending 20 wt% of glass fibers A, 20 wt% of glass fiber bundles B and 60 wt% of polypropylene resin, though the concise mixing ratio depends on the desired use of the molded products.

### Example 2

Nonwoven materials of 4500 g/m² in grammage were produced by the paper making method using the same glass fibers A, and the same polypropylene resin as used in Example 1, and glass fiber bundles C (the number of single fibers in each bundle: 200) and glass fiber bundles D (the number of single fibers in each bundle: 500). Glass fibre bundles C and D comprise the same surface treated glass fibers as glass fiber bundles B in Example 1 except for the number of the single fibers in each bundle. The composition of the nonwoven material was 20 wt% of glass fibers A, 20 wt% of glass fiber bundles C or D and 60 wt% of polypropylene resin. Fiber-reinforced thermoplastic resin sheets of 3.7 mm thickness were made from these nonwoven materials by the hot press consolidation under the same molding conditions as in Example 1. Then, the resulting sheets were heated in a far infrared heating oven until the surface temperature of the sheets reached 220°C whereupon the thickness of the sheets after heating and the difference in temperature between the surface of the sheets and that of the center in the direction of thickness were measured.

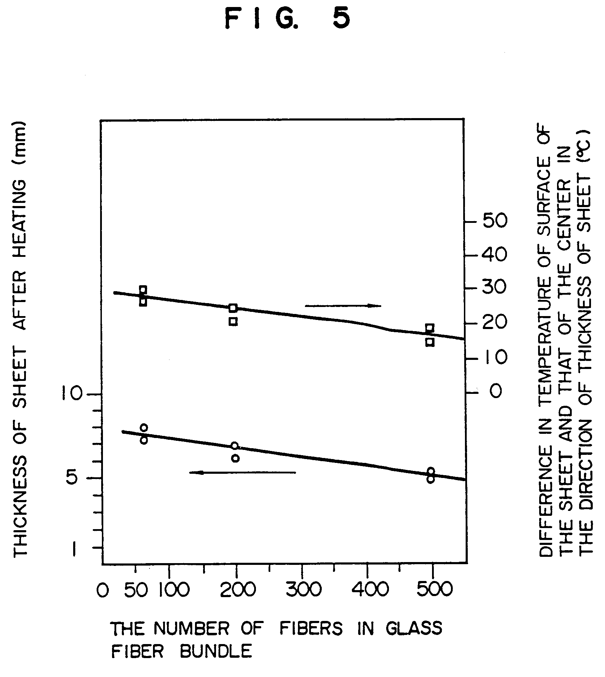

The results of Example 2 are shown in Fig. 5 (the arrows indicate the relevant abscissa) together with the results on glass fiber bundles B of Example 1.

It was confirmed that the heating characteristics of the resulting fiber-reinforced thermoplastic resin sheets were improved and flowability in the hot press molding was improved by increasing the number of single fibers in each glass fiber bundle.

## Claims

1. A method of producing a fiber-reinforced thermoplastic resin molding material (12) by mixing a thermoplastic resin (2) and reinforcing fibers according to a paper making method to form a non-woven material (8), and heating, pressing and then cooling the resulting non-woven material (8), characterized in that the reinforcing fibers are mixed with the thermoplastic resin in the form of single reinforcing fibers (1) and in the form of fiber bundles(13) each of which comprises 10 to 1000 single reinforcing fibers bundled with a water-insoluble binder.

2. A method according to claim 1, wherein the reinforcing fibers are inorganic fibers or organic fibers.

3. A method according to claim 1 or 2, wherein the reinforcing fibers are selected from the group consisting of glass fibers, carbon fibers and metallic fibers.

4. A method according to claim 1, 2 or 3, wherein the thermoplastic resin is selected from the group consisting of polyethylene,polypropylene, polystyrene, styrene-butadiene-acrylonitrile copolymer, polyvinyl chloride, polyvinylidene chloride, polyamide, polycarbonate, polyacetal, polyethylene terephthalate, polybutylene terephthalate, polyphenylene oxide, polysulfone and polyphenylene sulfide.

5. A method according to claim 1, 2, 3, or 4, wherein the binder for the glass fiber bundles is an urethane or vinyl acetate type binder.

6. A method according to claim 1, 2, 3, 4, or 5, wherein the reinforcing fiber bundles comprise single fibers having a diameter of 3-30 µm and a length of 3-50 mm.

7. A thermoplastic molding material (12) in the form of a non-woven material (8) consisting essentially of a thermoplastic resin (2) and reinforcing fibers, characterized in that the reinforcing fibers are present in the form of single reinforcing fibers (1) and in the form of fiber bundles (13) each of which comprises 10 to 1000 single reinforcing fibers bundled with a water-insoluble binder.

## Patentansprüche

1. Verfahren zur Herstellung einer faserverstärkten thermoplastischen Harzformmasse (12) durch Mischen eines thermoplastischen Harzes (2) und verstärkender Fasern nach einem Verfahren zur Papierherstellung, wobei ein nicht-gewebtes Material (8) erzeugt wird, und Erhitzen, Pressen sowie anschließendes Abkühlen des entstandenen nicht-gewebten Materials (8), dadurch gekennzeichnet, daß die verstärkenden Faser in Form verstärkender Einzelfasern (1) sowie in Form Von Faserbündeln (13), jeweils umfassend 10 bis 1.000 verstärkende Einzelfasern, die mit einem wasserunlöslichen Bindemittel gebündelt werden, mit dem thermoplastischen Harz gemischt werden.

2. Verfahren nach Anspruch 1, wobei die verstärkenden Fasern anorganische Fasern oder organische Fasern sind.

3. Verfahren nach Anspruch 1 oder 2, wobei die verstärkenden Fasern aus der Gruppe, bestehend aus Glasfasern, Kohlenstoffasern und Metallfasern, gewählt werden.

4. Verfahren nach Anspruch 1, 2 oder 3, wobei das thermoplastische Harz aus der Gruppe, bestehend aus Polyethylen, Polypropylen, Polystyrol, Styrol-Butadien-Acrylnitril-Copolymer, Polyvinylchlorid, Polyvinylidenchlorid, Polyamid, Polycarbonat, Polyacetal, Polyethylenterephthalat, Polybutylenterephthalat, Polyphenylenoxid, Polysulfon und Polyphenylensulfid, gewählt wird.

5. Verfahren nach Anspruch 1, 2, 3 oder 4, wobei das Bindemittel für die Glasfaserbündel ein Bindemittel vom Urethan- oder Vinylacetat-Typ ist.

6. Verfahren nach Anspruch 1, 2, 3, 4 oder 5, wobei die verstärkenden Glasfaserbündel Einzelfasern mit einem Durchmesser von 3 bis 30 µm und einer Länge von 3 bis 50 mm umfassen.

7. Thermoplastische Formmasse (12) in Form eines nicht-gewebten Materials (8), das im wesentlichen aus einem thermoplastischen Harz (2) und verstärkenden Fasern besteht, dadurch gekennzeichnet, daß die verstärkenden Fasern in Form von verstärkenden Einzelfasern (1) sowie in Form von Faserbündeln (13), jeweils umfassend 10 bis 1.000 verstärkende Einzelfasern, die mit einem wasserunlöslichen Bindemittel gebündelt werden, vorhanden sind.

## Revendications

1. Procédé qui consiste à produire un matériau (12) de moulage en résine thermoplastique renforcée par des fibres en mélangeant une résine thermoplastique (2) et des fibres de renforcement selon un procédé de fabrication du papier afin de former un matériau non-tissé (8), et en chauffant, en comprimant et puis en refroidissant le matériau non-tissé (8) résultant, caractérisé en ce que l'on mélange les fibres de renforcement avec la résine thermoplastique sous la forme de fibres individuelles de renforcement (1) et sous la forme de paquets de fibres (13), chacune de ces formes comprend de 10 à 1000 fibres individuelles de renforcement groupées avec un liant insoluble dans l'eau.

2. Procédé conforme à la revendication 1, dans lequel les fibres de renforcement sont des fibres minérales ou des fibres organiques.

3. Procédé conforme à la revendication 1 ou 2, dans lequel les fibres de renforcement sont choisies dans l'ensemble formé par les fibres de verte, fibres de carbone et fibres métalliques.

4. Procédé conforme à la revendication 1, 2 ou 3, dans lequel la résine thermoplastique est choisie dans l'ensemble formé par les polyéthylène, polypropylène, polystyrène, copolymère styrène/butadiène/acrylonitrile, poly(chlorure de vinyle), poly(chlorure de vinylidène), polyamide, polycarbonate, polyacétal, poly(éthylène téréphtalate), poly(butylène téréphtalate), poly(phénylène éther), polysulfone, et poly(sulfure de phénylène).

5. Procédé conforme à la revendication 1, 2, 3 ou 4, dans lequel le liant pour les paquets de fibres de verte est un liant de type uréthanne ou acétate de vinyle.

6. Procédé conforme à la revendication 1, 2, 3, 4 ou 5, dans lequel les paquets de fibres de renforcement comprennent des fibres individuelles ayant un diamètre de 3 à 30 µm et une longueur de 3 à 50 mm.

7. Matériau (12) thermoplastique de moulage sous la forme d'un matériau non-tissé (8) constitué essentiellement par une résine thermoplastique (2) et des fibres de renforcement, caractérisé en ce que les fibres de renforcement sont présentes sous la forme de libres de renforcement individuelles (1) et sous la forme de paquets de fibres (13), chacune de ces formes comprenant de 10 à 1000 de libres de renforcement individuelles groupées avec un liant insoluble dans l'eau.
